# EUROPEAN PATENT SPECIFICATION

(11) **EP 3 297 414 B1**
(45) Date of publication and mention of the grant of the patent: **19.02.2020**
(21) Application number: 16725606.4
(22) Date of filing: 17.05.2016
(51) Int. Cl.: A01B 61/04, A01B 59/06

(54) **COUPLING APPARATUS FOR CONNECTING AN AGRICULTURAL IMPLEMENT TO A PRIME MOVER**
KOPPLUNGSVORRICHTUNG ZUR VERBINDUNG EINES LANDWIRTSCHAFTLICHEN ARBEITSGERÄTS AN EINE ZUGMASCHINE
APPAREIL D'ACCOUPLEMENT POUR LE RACCORDEMENT D'UN INSTRUMENT AGRICOLE À UN MOTEUR PRINCIPAL

(30) Priority: 19.05.2015 IE 20150155
(43) Date of publication of application: 28.03.2018
(73) Proprietor: McHale Engineering, Ballinrobe, County Mayo (IE)
(72) Inventor: MCHALE, Padraic Christopher, Clonbur County Galway (IE); MCHALE, Martin William, Kilmaine County Mayo (IE); MCHALE, Paul Gerard, Tuam County Galway (IE); BIGGINS, John Patrick, Hollymount County Mayo (IE); HEANEY, James John, Claremorris County Mayo (IE); SHERIDAN, Gerard Patrick, Kilmaine County Mayo (IE); COLLINS, Donal Patrick, Dunmore County Galway (IE)
(74) Representative: Gorman, Francis Fergus
(86) International application number: PCT/IE2016/000010
(87) International publication number: WO 2016/185455

(56) References cited:
- EP-A1- 1 300 065
- EP-A2- 0 456 900
- DE-A1- 19 624 396
- FR-A1- 2 484 761
- FR-A1- 2 659 186
- GB-A- 1 554 328
- GB-A- 1 586 730

## Description

The present invention relates to coupling apparatus for connecting an agricultural implement to a prime mover, for example, to a tractor.

Coupling apparatus for coupling an agricultural implement, for example, a mower to a prime mover, such as a tractor, is well known. Such coupling apparatus for coupling a mower to a tractor or other prime mover, in general, is adapted for coupling the mower to a three-point linkage of a tractor, either to a three-point linkage which is forwardly located on the tractor or a rearwardly located three-point linkage. Typically, such coupling apparatus for coupling a mower to a rearwardly located three-point linkage on a tractor is configured so that the mower is located to the rear of the tractor, and may extend sidewardly from the tractor. In such coupling apparatus provision is made for pivoting the mower upwardly from an operative state with the mower located adjacent the ground to a transport state with the mower raised above the ground.

In cases where the coupling apparatus is configured to couple a mower to a three-point linkage located to the rear of a tractor with the mower extending sidewardly from the tractor, the coupling apparatus, in general, comprises an elongated carrier arm extending sidewardly from the tractor, and the mower is mounted on the carrier arm. In such cases the carrier arm is operable from the operative state with the mower located adjacent the ground to the transport state, where the carrier arm and the mower extend generally substantially vertically upwardly to facilitate transporting the mower attached to the tractor by the coupling apparatus along a public road or other thoroughfare.

Additionally, in such coupling apparatus provision is made to allow the carrier arm and the mower to pivot rearwardly and also upwardly in the event of the mower encountering an obstruction, in order to avoid or at least minimise damage to the mower and to the coupling apparatus.

In general, the carrier arm is coupled to the three-point linkage of a tractor by a mounting system, which is configured to be coupled to the three-point linkage. The carrier arm is pivotally coupled to the mounting system about a horizontal pivot axis and also about a vertical pivot axis. The carrier arm is pivotal about the horizontal pivot axis between the operative state and the transport state. An hydraulic ram acting between the mounting system and the carrier arm urges the carrier arm between the operative state and the transport state. When the carrier arm is in the operative state, the hydraulic ram is operated into a floating state, and an hydraulic suspension spring extending between the mounting system and the carrier arm supports the carrier arm with a skid plate of the mower bearing on the ground. The hydraulic suspension spring is configured for setting the force with which the skid plate bears on the ground within predefined upper and lower limits. The carrier arm is retained in the operative state with the carrier arm extending sidewardly outwardly from the tractor, and is prevented from pivoting rearwardly about the vertical pivot axis by a spring loaded latching mechanism. The spring loaded latching mechanism is set to release when it is subject to a predefined load, so that when the mower encounters an obstruction, once the force of the mower against the obstruction reaches the predefined load value at which the spring loaded latching mechanism is configured to release, the spring loaded latching mechanism releases the carrier arm so that the carrier arm can pivot rearwardly about the vertical pivot axis. Additionally, the hydraulic suspension spring is configured to allow the carrier arm to pivot upwardly about the horizontal pivot axis in the event of the mower encountering an obstruction, such as a rock projecting upwardly from the ground, so that the mower can ride over the obstruction.

However, two problems arise with such coupling apparatus. Firstly, in the event of the mower encountering an obstruction, the mower must initially act against the obstruction with a force greater than the predefined load required by the spring loaded latching mechanism, before the spring loaded latching mechanism releases and the carrier arm is free to pivot rearwardly about the vertical pivot axis. This results in a delay before the spring loaded latching mechanism is released, which in general results in the mower suffering initial damage prior to the carrier arm being released to pivot rearwardly about the vertical pivot axis. Secondly, the reaction time of the hydraulic suspension spring is relatively slow, and before the carrier arm commences to pivot upwardly about the horizontal pivot axis in the event of an obstruction being encountered, the mower may suffer initial damage before the carrier arm commences to pivot upwardly about the vertical pivot axis in order to allow the mower to ride over the obstruction.

German Patent Specification No. 196 24 396 of Grenzebach discloses a coupling apparatus for connecting an agricultural implement, such as a mower to the forward end of a prime mover, for example, a tractor. The coupling apparatus comprises a carrier element which is adapted for connecting to the tractor, a mounting element which is adapted for coupling to the agricultural implement, and a linkage mechanism which extends forwardly from the carrier element to the mounting element for suspending the mounting element and the agricultural implement from the carrier element. The linkage mechanism defines a main pivot axis about which the mounting element is pivotal as the implement moves upwardly and downwardly relative to the carrier element as the mower follows the contour of the ground. A tension spring diagonally coupled between the carrier element and the mounting element takes up some of the weight of the mower.

French Patent Specification No. 2,659,186 of Schulz, et al discloses coupling apparatus for front mounting a mower to a tractor. The coupling apparatus comprises a carrier element for mounting to a three-point linkage adjacent the forward end of the tractor, and a forwardly projecting element extending forwardly and rigidly from the carrier element. A mounting element to which the mower is mounted is suspended from the forwardly projecting member by a parallelogram linkage which extends rearwardly from the forwardly projecting element. The parallelogram linkage is configured to permit pivoting of the mower, so that a skid plate of the mower follows the contour of the ground.

European Patent Specification No. 0,456,900 of Lehner discloses coupling apparatus for front mounting a mower to the forward end of a tractor. The coupling apparatus comprises a carrier element which extends forwardly from the tractor and a mounting element to which the mower is secured. A parallelogram linkage mechanism extending rearwardly downwardly from the carrier element couples the mounting element and in turn the mower to the carrier element. The linkage mechanism permits upward and downward movement of the mower so that the mower can follow the rising and falling contours of the ground.

There is therefore a need for coupling apparatus for connecting a mower, and indeed, other agricultural implements to a prime mover which addresses at least one of the problems discussed above.

The present invention is directed towards providing such a coupling apparatus for connecting a mower or other agricultural implement to a prime mover.

According to the invention there is provided coupling apparatus for connecting an agricultural implement to a rearward three-point linkage of a prime mover, the coupling apparatus comprising a carrier element adapted for connecting to the prime mover, a mounting element adapted for coupling to the agricultural implement, a linkage mechanism connecting the mounting element to the carrier element with the mounting element and the agricultural implement suspended by the linkage mechanism from the carrier element, the linkage mechanism defining a main pivot axis about which the mounting element and the agricultural implement are moveable relative to the carrier element between an operative state and a displaced state displaced from the operative state, and a resilient element connected between the carrier element and the mounting element and configured to resiliently urge the mounting element and the agricultural implement into the operative state, wherein the linkage mechanism comprises a first link member pivotally connected to the carrier element about a first pivot axis at a first location and pivotally connected to the mounting element about a second pivot axis at a second location, a second link member pivotally connected to the carrier element about the first pivot axis at a third location spaced apart from the first location along the first pivot axis and pivotally connected to the mounting element about the second pivot axis at a fourth location spaced apart from the second location along the second pivot axis, and a third link member pivotally connected to one of the carrier element and the mounting element about a third pivot axis at a fifth location and pivotally connected to the other one of the carrier element and the mounting element about a fourth pivot axis at a sixth location, the first, second, third and fourth pivot axes being spaced apart from each other and extending parallel to each other and substantially transversely relative to the direction of normal forward motion of the agricultural implement, the first link member is pivotally connected to the carrier element about the first pivot axis at a seventh location spaced apart from the first location along the first pivot axis for minimising slewing of the mounting element relative to the carrier element about the linkage mechanism, and a stabilising means comprising a pair of spaced apart abutment elements extends from the carrier element for engaging the first link member adjacent the first location and the seventh location for minimising axial movement of the first link member along the first pivot axis.

In one aspect of the invention a limit means is configured for defining the limit of the movement of the mounting element relative to the carrier element towards the operative state. Preferably, the limit means is configured to prevent the movement of the mounting element relative to the carrier element beyond the operative state.

In another aspect of the invention the limit means is configured for defining the limit of movement of the mounting element relative to the carrier element towards the displaced state. Preferably, the limit means is configured to prevent movement of the mounting element relative to the carrier element beyond the displaced state.

In another aspect of the invention the linkage mechanism is configured to define the main pivot axis about which the mounting element and the agricultural implement are moveable relative to the carrier element at a location generally rearwardly of an area of contact of the agricultural implement with the ground, relative to the direction of normal forward motion of the agricultural implement, when the agricultural implement is in the operative state.

In another aspect of the invention the linkage mechanism is configured to define the main pivot axis about which the mounting element and the agricultural implement are moveable relative to the carrier element at a level below the ground when the agricultural implement is in the operative state.

Preferably, the mounting element is suspended by the linkage mechanism from the carrier element with the mounting element and the agricultural implement substantially trailing the carrier element relative to the direction of normal forward motion of the agricultural implement. Advantageously, the resilient element is located rearwardly of the linkage mechanism.

In one aspect of the invention the linkage mechanism is configured so that as the mounting element moves relative to the carrier element from the operative state to the displaced state, the angle of attack of the agricultural implement relative to the horizontal progressively increases.

In another aspect of the invention the linkage mechanism is configured so that as the mounting element moves relative to the carrier element from the displaced state to the operative state, the angle of attack of the agricultural implement relative to the horizontal regressively decreases.

Preferably, the linkage mechanism is configured so that as the mounting element moves from the operative state to the displaced state, the angle of attack of the agricultural implement progressively increases from a negative angle relative to the horizontal with the angle of attack inclined generally forwardly downwardly relative to the direction of normal forward motion of the agricultural implement to one of a lesser negative angle relative to the horizontal and a positive angle relative to the horizontal.

In one aspect of the invention the linkage mechanism defines a secondary pivot axis about which the mounting element and the agricultural implement are tiltable.

Preferably, the secondary pivot axis defined by the linkage mechanism inclines in a generally downwardly rearwardly direction relative to the direction of normal forward motion of the agricultural implement.

Advantageously, the angle of inclination of the secondary pivot axis is a function of the displacement of the mounting element from the operative state thereof.

In another aspect of the invention the third link member is pivotally connected to the carrier element about the fifth pivot axis.

Preferably, the third link member is located rearwardly of the first and second link members relative to the direction of normal forward motion of the agricultural implement.

Advantageously, the third link member is contained in a vertical plane extending in the direction of normal forward motion of the agricultural implement and is located intermediate the first location and the third location. Advantageously, the vertical plane containing the third link member is spaced apart from the first location and the second location.

Preferably, the secondary pivot axis defined by the linkage mechanism is contained in a vertical plane extending in a direction of the normal forward motion of the agricultural implement and is located intermediate the first location and the third location.

Advantageously, the vertical plane containing the secondary pivot axis is spaced apart from the first location and the second location.

Ideally, the vertical plane containing the secondary pivot axis is spaced apart from the vertical plane containing the third link member.

In one aspect of the invention each one of the first and second link members are pivotally coupled to the one of the carrier element and the mounting element about the second pivot axis by swivellable pivot couplings.

Preferably, the second link member is pivotally coupled to the one of the carrier element and the mounting element about the first pivot axis by a swivellable pivot coupling.

Advantageously, the third link member is pivotally coupled to at least one of the carrier element and the mounting element about the one of the third and fourth pivot axes by a swivellable pivot coupling.

Preferably, the third link member is pivotally coupled to the carrier element and the mounting element about the respective third and fourth pivot axes by respective swivellable pivot couplings.
In one aspect of the invention the first link member is pivotally connected to the one of the carrier element and the mounting element about the first pivot axis by a pivot shaft which is carried on one of the first link member and the said one of the carrier element and the mounting element.

In another aspect of the invention a sleeve extends rigidly from the first link member and is pivotally engageable with the first pivot shaft, the distal end of the sleeve defining the seventh location, and the sleeve is retained between abutment elements extending from the one of the carrier element and the mounting element for preventing movement of the sleeve longitudinally along the first pivot shaft for stabilising the mounting element relative to the carrier element.

Advantageously, the resilient element is pivotally connected to one of the carrier element and the mounting element about a fifth pivot axis, and to the other one of the carrier element and the mounting element about a sixth pivot axis, the fifth and sixth pivot axes being spaced apart from each other and being spaced apart from the first, second, third and fourth pivot axes and extending parallel to the first, second, third and fourth pivot axes.

Advantageously, a pair of the resilient elements is provided, connected to the ones of the carrier element and the mounting element about the fifth and sixth pivot axes, respectively, the resilient elements being spaced apart from each other along the fifth and sixth pivot axes. Preferably, the resilient elements are located on respective opposite sides of the vertical plane containing the third link member, and are spaced apart therefrom.

In one aspect of the invention the resilient elements are located on respective opposite sides of the vertical plane containing the secondary pivot axis defined by the linkage mechanism, and are spaced apart therefrom.

In another aspect of the invention the limit means comprises a first stop means, the first stop means being configured to prevent movement of the agricultural implement beyond the operative state in a direction from the displaced state to the operative state.

Preferably, the first stop means is located on at least one of the first and second link members.

Advantageously, the first stop means co-operates with one of the carrier element and the mounting element to prevent the movement of the agricultural implement beyond the operative state.

Preferably, the first stop means defines a first abutment surface engageable with the one of the carrier element and the mounting element.

Advantageously, the first stop means is co-operable with the carrier element.

In one aspect of the invention a pair of first stop means is provided, one of the first stop means being located on the first link member, and the other one of the first stop means being located on the second link member.

In another aspect of the invention the limit means comprises a second stop means, the second stop means being configured to prevent movement of the agricultural implement beyond the displaced state in a direction from the operative state to the displaced state.

In another aspect of the invention the second stop means is located on at least one of the first and second link members.

Preferably, the second stop means co-operates with one of the carrier element and the mounting element to prevent the movement of the agricultural implement beyond the displaced state.

Advantageously, the second stop means defines a second abutment face engageable with the one of the carrier element and the mounting element.

In one aspect of the invention the second stop means is co-operable with the carrier element.

In another aspect of the invention a pair of the second stop means is provided, one of the second stop means being located on the first link member and the other one of the second stop means being located on the second link member.

In one aspect of the invention the coupling apparatus is adapted for coupling a mower to the mounting system.

In another aspect of the invention the mower comprises a ground engaging skid plate having a leading edge and a trailing edge.

In a further aspect of the invention the linkage mechanism is configured so that as the mounting element and the mower move relative to the carrier element about the main pivot axis from the operative state to the displaced state, the angle of attack of the skid plate of the mower relative to a horizontal plane progressively increases from the negative angle with the skid plate of the mower inclined forwardly downwardly from the trailing edge to the leading edge thereof to one of a less negative angle and a positive angle.

In another aspect of the invention the carrier element comprises a carrier arm.

In a further aspect of the invention an agricultural implement is coupled to the coupling apparatus.

The invention also provides in combination a prime mover, an agricultural implement, and coupling apparatus according to the invention connecting the agricultural implement to the prime mover. Preferably, the carrier element of the coupling apparatus is connected to the prime mover through a mounting system.

Additionally, the invention provides a combination of a prime mover, an agricultural implement, and a coupling apparatus according to the invention connecting the agricultural implement to the prime mover. Preferably, the carrier element of the coupling apparatus according to the invention is connected to the prime mover through a mounting system.

The advantages of the invention are many. A particularly important advantage of the invention is that the coupling apparatus permits initial displacement of the agricultural implement from the operative state in a generally upwardly and rearwardly direction immediately upon impact with an obstruction. This initial displacement of the agricultural implement from the operative state is sufficient to compensate for delays in other release and safety systems which may be provided for coupling the carrier element to a prime mover in order to allow the agricultural implement to either ride over the obstruction or to move to clear the obstruction. For example, in cases where the carrier element comprises a carrier arm which is connected to a prime mover as described above in the introduction whereby the carrier arm is pivotal rearwardly about a vertical pivot axis in the event of the agricultural implement encountering an obstruction, and to pivot upwardly about a horizontal axis to allow the agricultural implement to ride over the obstruction, the coupling apparatus according to the invention allows sufficient upward and rearward displacement of the agricultural implement from the operative state to compensate for delays in the release of any spring loaded latching mechanism which would delay the carrier arm pivoting rearwardly about the vertical axis, and any delay in the reaction time of an hydraulic suspension system which would delay the carrier arm pivoting upwardly about the horizontal pivot axis. Therefore, by the time the carrier arm has been released to pivot rearwardly and upwardly, the initial upward and rearward displacement of the agricultural implement relative to the carrier arm which is provided for by the coupling apparatus according to the invention is sufficient to avoid or at least minimise initial damage to the agricultural implement in the event of an obstruction being encountered, and further damage to the agricultural implement is avoided or minimised as the carrier arm then commences to pivot rearwardly and upwardly to allow the agricultural implement to clear the obstruction and/or to ride over the obstruction.

A further and particularly important advantage of the coupling apparatus according to the invention is that in many cases, particularly in the cases of relatively small obstructions, the upward and rearward displacement of the agricultural implement which is provided for by the coupling apparatus according to the invention is sufficient to allow the agricultural implement to either clear or ride over the obstruction without the need for other release and safety systems which permit movement of the carrier element to be employed.

When the coupling apparatus according to the invention is configured to connect a mower to a prime mover, particularly important advantages are obtained from the invention. In general, such mowers comprise a skid plate which rides along the ground, and which carries a plurality of cutting elements which extend radially from the respective discs, and which are spaced apart circumferentially around the periphery of each disc. Thus, in the event of the skid plate of the mower encountering an obstruction, the mounting element, and in turn the mower is immediately displaced upwardly and rearwardly relative to the carrier element from the operative state, thereby avoiding or at least minimising any initial damage to the mower. In cases where the carrier element is provided by a carrier arm which is in turn coupled to the prime mover and is pivotal about vertical and horizontal pivot axes, the initial upward and rearward displacement of the mower about the carrier arm is sufficient to compensate for any delays in the carrier arm pivoting rearwardly about the vertical axis and upwardly about the horizontal axis to allow the mower to clear and/or ride over the obstruction so that further damage to the mower is avoided or at least minimised. Indeed, in many cases the initial upward and rearward displacement of the mower from the operative state, in many cases, is sufficient to allow the mower clear and/or ride over the obstruction, without the need for the carrier arm pivoting either rearwardly or upwardly.

These advantages of the coupling apparatus according to the invention are achieved by virtue of the fact that the linkage mechanism of the coupling apparatus is an entirely mechanical mechanism with virtually no reaction time delay which would otherwise result from an hydraulic suspension system, or spring loaded latching mechanism. Thus, by virtue of the relatively fast reaction time of the coupling apparatus according to the invention, in general, damage to the agricultural implement on impact with an obstruction is minimised, and in many cases, is avoided.

The invention will be more clearly understood from the following description of a preferred embodiment thereof, which is given by way of example only, with reference to the accompanying drawings, in which:
Fig. 1 is a perspective view from the top, rear and one side of coupling apparatus according to the invention for coupling an agricultural implement to a prime mover with the agricultural implement illustrated,
Fig. 2 is a perspective view from the top, front and the other side of the coupling apparatus of Fig. 1 with the agricultural implement illustrated,
Fig. 3 is an end elevational view of the coupling apparatus of Fig. 1 with the agricultural implement illustrated,
Fig. 4 is an underneath perspective view of a portion of the apparatus of Fig. 1,
Fig. 5 is a perspective view from the front of the coupling apparatus of Fig. 1,
Fig. 6 is a perspective view from the rear of the coupling apparatus of Fig. 1,
Fig. 7 is an end elevational view of the coupling apparatus of Fig. 1,
Fig. 8 is a view similar to Fig. 7 of the coupling apparatus of Fig. 1 illustrating the coupling apparatus in a different state to that of Fig. 7,
Fig. 9 is a view similar to Fig. 7 of the coupling apparatus of Fig. 1 with the agricultural implement attached to the coupling apparatus, and with the coupling apparatus in the state of Fig. 7, and
Fig. 10 is a view similar to Fig. 9 of the coupling apparatus of Fig. 1 with the agricultural implement attached thereto illustrating the coupling apparatus and the agricultural implement in a different state to that of Fig. 9.

Referring to the drawings, there is illustrated coupling apparatus according to the invention, indicated generally by the reference numeral 1, for coupling an agricultural implement, in this embodiment of the invention a mower 3 to a mounting system, namely, a mounting framework 2 adapted for coupling to a prime mover (not shown), which typically would be a tractor (not shown). The coupling apparatus 1 is particularly suitable for coupling the mower 3 or any other agricultural implement to the rearward three-point linkage of the tractor with the mower 3 or other agricultural implement located rearwardly of the tractor and extending outwardly to one side of the tractor and rearwardly thereof. In this embodiment of the invention the coupling apparatus 1 is illustrated for coupling the mower 3 to the rearward three-point linkage of a tractor with the mower 3 extending sidewardly outwardly from the tractor to the rear thereof.

The mower 3 is of the type which comprises a housing 5 and a skid plate 7 carried on the housing 5. The skid plate 7 comprises a leading edge 8 and a trailing edge 9, and extends longitudinally the width of the mower 3 from one end 4 to the other end 6. A plurality of longitudinally spaced apart mowing elements 10 are carried on the skid plate 7. Each mowing element 10 comprises a rotatably mounted disc element 11, on which a plurality of cutting blades 12 are mounted equi-spaced apart around the periphery of the disc element 11 and extending radially therefrom, for cutting the crop, such as grass as the disc element 11 rotates. Such mowers as the mower 3 will be well known to those skilled in the art, and it is not intended to describe the mower 3 in further detail.

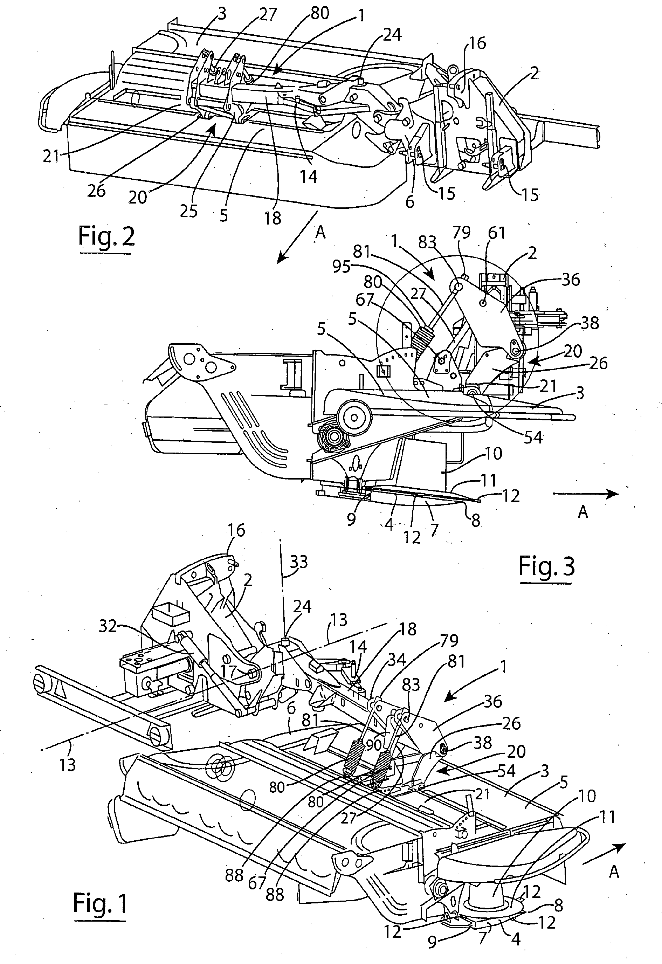

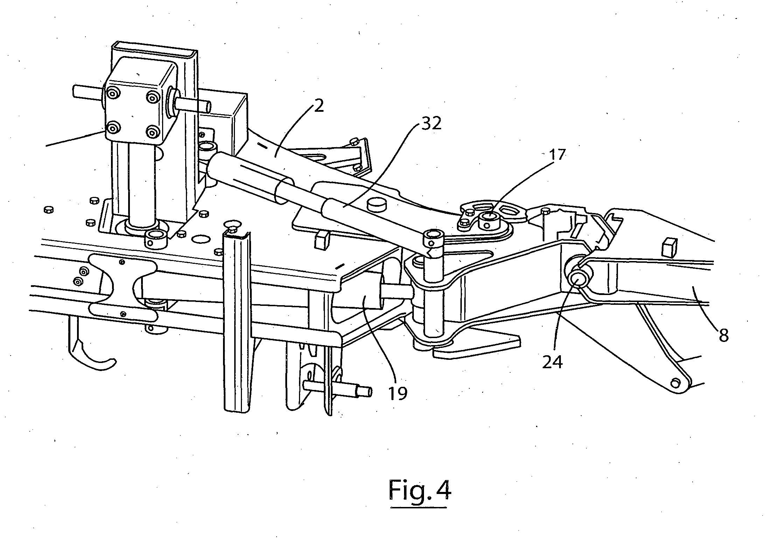

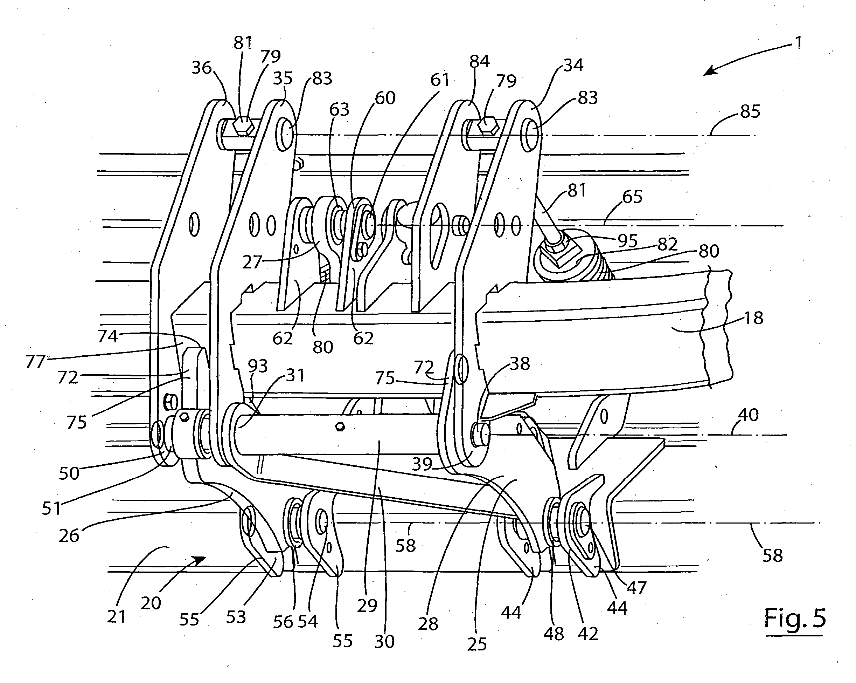

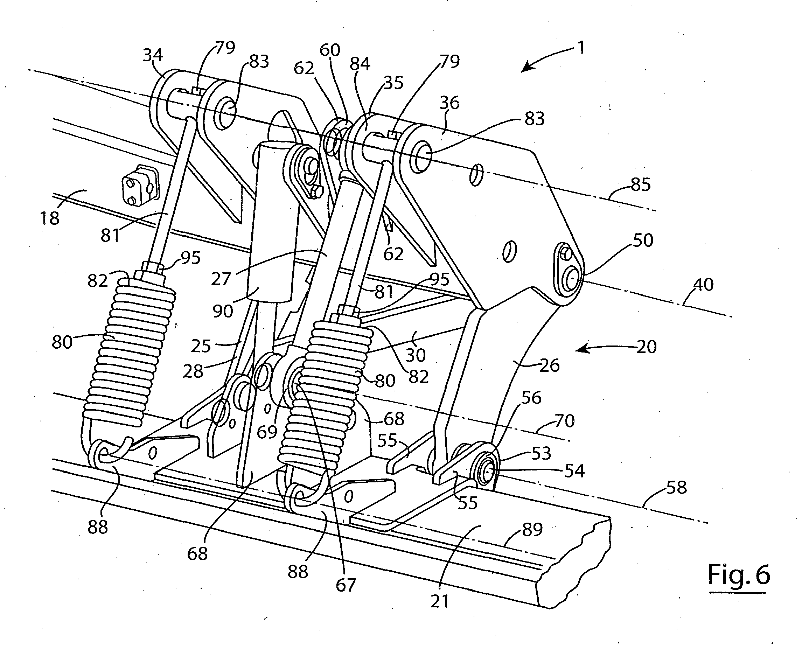

The mounting framework 2 comprises three mounting locations, namely, a pair of spaced apart lower mounting locations 15, and an upper location 16 for engaging lower and upper links (not shown) of a three-point linkage (not shown) of the tractor, for in turn coupling the mounting framework 2 to the tractor. The coupling apparatus 1 comprises a carrier element, namely, a carrier arm 18 which is coupled to the mounting framework 2 and extends sidewardly outwardly from the mounting framework 2 in a working state extending substantially transversely of the direction of normal forward motion of the mower 3, which is indicated by the direction of the arrow A. The carrier arm 18 is illustrated in the working state in all of Figs. 1 to 10. The carrier arm 18 is pivotally coupled to the mounting framework 2 by a horizontally extending pivot shaft 17 which defines a horizontal pivot axis 13, so that the carrier arm 18 is pivotal about the horizontal pivot axis 13 from the working state extending transversely of the normal direction of forward motion of the mower 3 to a transporting state (not shown) extending generally vertically upwardly from the mounting framework 2 to facilitate transporting of the mower 3 on a public roadway.
An hydraulic ram 19 acting between the mounting framework 2 and the carrier arm 18, see Fig. 4, urges the carrier arm 18 between the working state and the transporting state about the horizontal pivot axis 13. The pivotal coupling of the carrier arm 18 to the mounting framework 2 about the horizontal pivot axis 13 and the hydraulic system which powers the ram 19 are configured so that when the carrier arm 18 is in the working state, the hydraulic ram 19 is operated in a floating state, with the carrier arm 18 also in a floating state. This thus permits the carrier arm 18 to rise and fall without being impeded by the hydraulic ram 19, as the skid plate 7 of the mower 3 rides along the ground and follows the rising and falling contour of the ground during mowing.

An hydraulic suspension spring 32 acting between the mounting framework 2 and the carrier arm 18 supports the carrier arm 18 in the working state, so that the force with which the skid plate 7 of the mower 3 bears on the ground is maintained within predefined upper and lower limits. Such hydraulic suspension springs as the hydraulic suspension spring 32 for supporting such a carrier arm as the carrier arm 18 carrying a mower will be well known to those skilled in the art.

Additionally, the carrier arm 18 is pivotally coupled to the mounting framework 2 by a substantially vertically extending pivot shaft 24, which defines a vertical pivot axis 33 about which the carrier arm 18 is pivotal in a substantially horizontal plane in a generally rearwardly direction relative to the direction of normal forward motion of the mower 3 in the event of the mower 3 hitting an obstacle or obstruction. The carrier arm 18 is retained in the working state against rearward pivotal movement about the vertical pivot axis 33 by a spring loaded latching mechanism 14, which retains the carrier arm 18 in the working state until the mower 3 encounters an obstruction. The spring loaded latching mechanism 14 is set to release the carrier arm 18 to pivot rearwardly about the vertical pivot axis on the force of an impact of the mower 3 with an obstruction exceeding a predefined force, in order to minimise damage to the mower. Once the force of an impact of the mower 3 with an obstruction exceeds the predefined force, the spring loaded latching mechanism 14 releases, and the carrier arm 18 is free to pivot rearwardly about the vertical pivot axis 33. Such spring loaded latching mechanisms as the spring loaded latching mechanism 14 for retaining a carrier arm in a working state, and releasing the carrier arm in the event of an impact of a mower carried thereon with an obstruction will be well known to those skilled in the art, and further description should not be required.

The coupling apparatus 1 comprises a mechanical linkage mechanism 20 for coupling the mower 3 to the carrier arm 18, so that the mower 3 is suspended from the carrier arm 18 by the linkage mechanism 20. A mounting element, in this embodiment of the invention, an elongated mounting member 21 is secured to and carries the mower 3, and extends longitudinally the length of the housing 5 of the mower 3. The linkage mechanism 20 connects the mounting member 21 to the carrier arm 18, and suspends the mounting member 21 and in turn the mower 3 from the carrier arm 18, as will be described below.

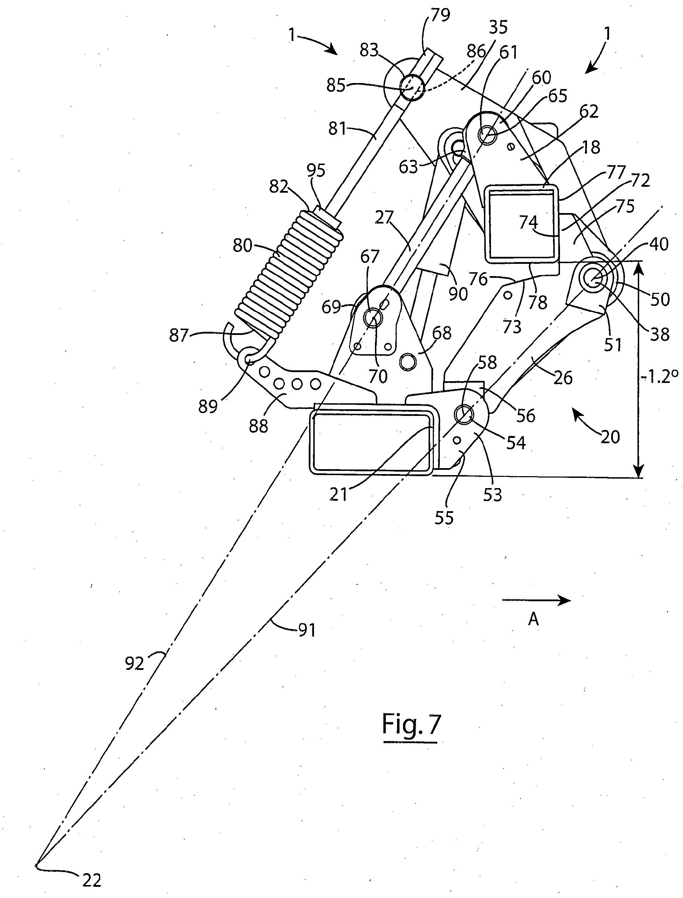

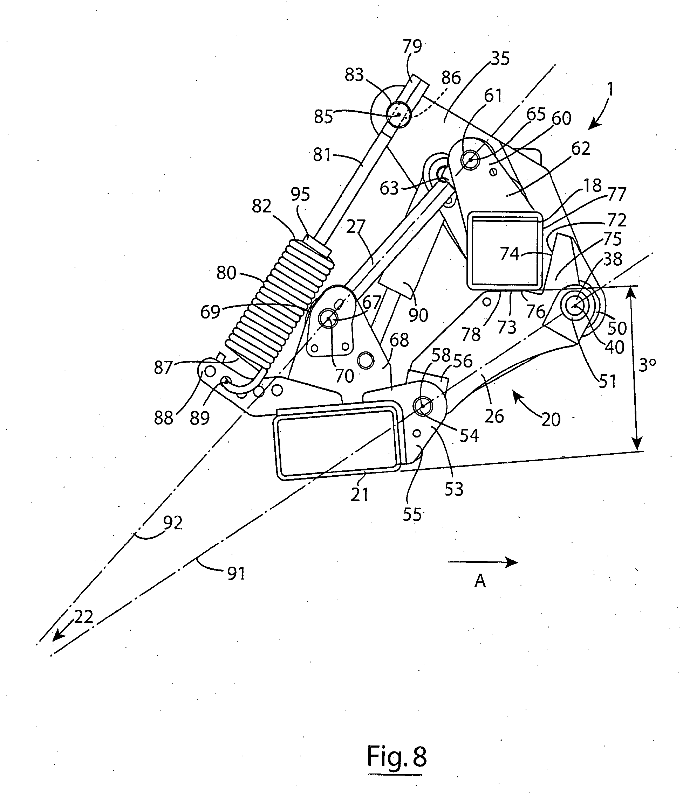

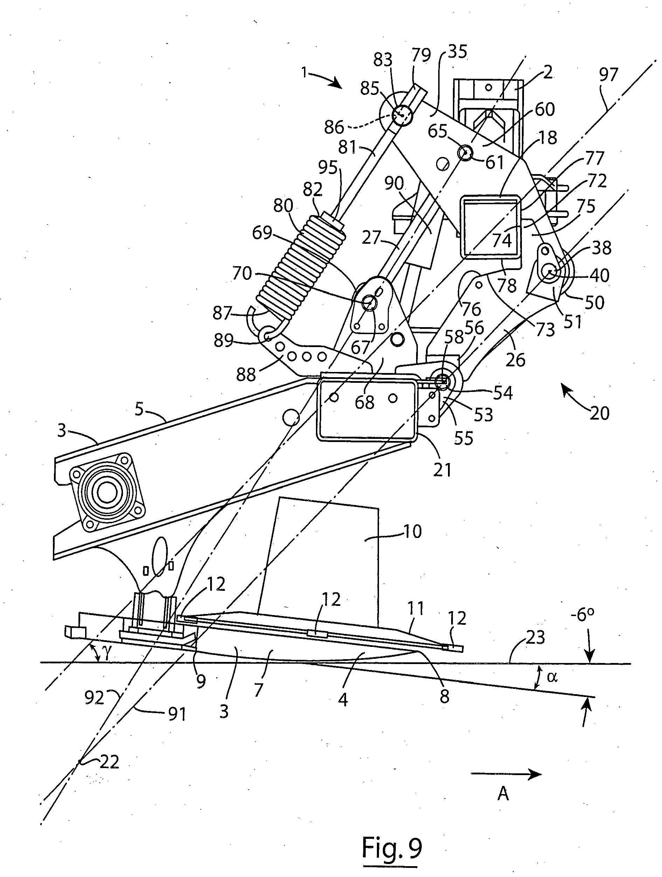

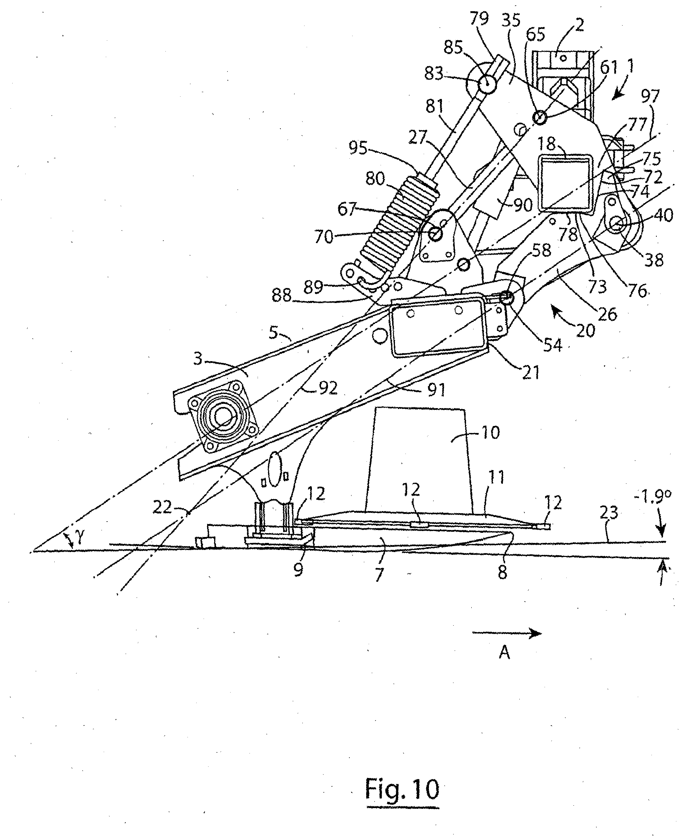

The linkage mechanism 20 is configured to suspend the mounting member 21 and in turn the mower 3 from the carrier arm 18 in an operative state illustrated in Figs. 7 and 9 when the carrier arm 18 is in the working state so that the skid plate 7 of the mower 3 rides along the ground in the operative state as the mower 3 is urged forwardly in the direction of the arrow A by the tractor. The linkage mechanism 20 is also configured to allow relatively rapid movement of the mounting member 21, and in turn the mower 3 from the operative state in a generally upwardly rearwardly direction to a displaced state illustrated in Figs. 8 and 10, in the event of the mower 3 striking an obstruction. Therefore, the linkage mechanism 20 allows the mower 3 to initially move relatively rapidly from the operative state to the displaced state in order to avoid or at least minimise damage to the mower 3, before the carrier arm 18 commences to pivot rearwardly and upwardly about the vertical and horizontal pivot axes 33 and 13, due to any delay in release of the spring loaded latching mechanism 14 and the reaction time of the hydraulic suspension spring 32.

The linkage mechanism 20 defines a main pivot axis 22 about which the mounting member 21 and the mower 3 is moveable relative to the carrier arm 18 between the operative state and the displaced state, see Figs. 7 to 10. The location of the main pivot axis 22 varies as the mounting member 21 and mower 3 is moving between the operative state and the displaced state. However, when the skid plate 7 of the mower 3 is engaged with and riding along the ground with the mounting member 21 and the mower 3 in the operative state, the main pivot axis 22 is located rearwardly of the contact area of the skid plate 7 with the ground, and below the surface 23 of the ground, in order to minimise the reaction time of the linkage mechanism 20 for facilitating pivoting of the mower 3 from the operative state to the displaced state about the main pivot axis 22. The configuration of the linkage mechanism 20 to define the main pivot axis 22 will be described in more detail below.

Turning now to the construction of the linkage mechanism 20, the linkage mechanism 20 comprises a first link member 25, a second link member 26 and a third link member 27, all of which are rigid link members. The first link member 25 comprises a link plate 28 and an elongated sleeve 29 rigidly connected to the link plate 28 and extending substantially perpendicularly from the link plate 28. A reinforcing member 30 rigidly secured to the distal end 31 of the sleeve 29 extends from the distal end 31 of the sleeve 29 to the link plate 28 to which it is rigidly secured for reinforcing the sleeve 29 and for retaining the sleeve 29 substantially perpendicular to the link plate 28. Three mounting means, namely, a first mounting plate 34, a second mounting plate 35 and a third mounting plate 36 are rigidly secured to the carrier arm 18, and carry a first pivot shaft 38 which extends through the sleeve 29, and on which the sleeve 29 is pivotal for pivotally coupling the first link member 25 at a first location 39 to the carrier arm 18. The first pivot shaft 38 define a first pivot axis 40 about which the first link member 25 is pivotally coupled to the carrier arm 18.

The first link member 25 is pivotally coupled at a second location 42 to the mounting member 21. A pair of mounting brackets 44 extending from a mounting member 21 carry a second pivot shaft 47 which engages a swivellable pivot coupling 48 at the end of the first link member 25 for pivotally and swivellably coupling the first link member 25 to the mounting member 21, and in turn to the mower 3.
The second link member 26 is pivotally coupled to the carrier arm 18 at a third location 50 by the first pivot shaft 38 extending between the second and third mounting plates 35 and 36. A swivellable pivot coupling 51 carried in the second link member 26 pivotally engages the first pivot shaft 38, so that the second link member 26 is pivotally and swivellably coupled to the carrier arm 18 about the first pivot axis 40.

The second link member 26 is pivotally coupled to the mounting member 21 at a fourth location 53 by a third pivot shaft 54, which is carried in a pair of mounting brackets 55 extending from the mounting member 21. The third pivot shaft 54 pivotally engages a swivellable pivot coupling 56 carried in the second link member 26 for pivotally and swivellably coupling the second link member 26 to the mounting member 21, and in turn to the mower 3. The mounting brackets 44 which carry the second pivot shaft 47 and the mounting brackets 55 which carry the third pivot shaft 54 carry the second and third pivot shafts 47 and 54, respectively, so that the second and third pivot shafts 47 and 54 are aligned to define a common second pivot axis 58 about which the first and second link members 25 and 26 are pivotally coupled to the mounting member 21, and in turn to the mower 3.

The third link member 27 is pivotally coupled to the carrier arm at a fifth location 60 by a fourth pivot shaft 61. The fourth pivot shaft 61 is carried on a pair of spaced apart mounting brackets 62 extending from the carrier arm 18. The fourth pivot shaft 61 pivotally engages a swivellable pivot coupling 63 at one end of the third link member 27. The fourth pivot shaft 61 defines a third pivot axis 65 about which the third link member 27 is pivotally and swivellably coupled to the carrier arm 18. The third link member 27 is pivotally coupled to the mounting member 21 by a fifth pivot shaft 67 which is carried on a pair of spaced apart mounting brackets 68 extending from the mounting member 21. The fourth pivot shaft 67 engages a swivellable pivot coupling 69 of the third link member 27. The fifth pivot shaft 67 defines a fourth pivot axis 70 about which the third link member 27 is pivotally and swivellably coupled to the mounting member 21, and in turn to the mower 3.

The first, second, third and fourth pivot axes 40, 58, 65 and 70, respectively, are spaced apart from each other, extend parallel to each other and extend substantially transversely relative to the direction of normal forward motion of the mower 3.

A limit means for limiting the movement of the mounting member 21, and in turn the mower 3 relative to the carrier arm 18 about the main pivot axis 22, so that the mounting member 21, and in turn the mower 3 can only move between the operative state and the displaced state comprises a pair of first stop means, namely, first stop members 72, and a pair of second stop means, namely, second stop members 73. The first stop members 72 are provided by lugs 75 which extend from the first and second link members 25 and 26, in the case of the first link member 25 beyond the sleeve 29, and in the case of the second link member 26 beyond the swivellable pivot coupling 51, which couples the second link member 26 to the first pivot shaft 38. The lugs 75 forming the first stop members 72 define respective first abutment surfaces 74, which are engageable with the mounting member 21. The second stop members 73 are formed by second abutment surfaces 76, one of which is formed on the first link member 25 and extends from the lower end of the corresponding first abutment surface 74, and the other of which is formed on the second link member 26 and extends from the lower end of the corresponding first abutment surface 74.

The first abutment surfaces 74 of the lugs 75 which form the first stop members 72 co-operate with and engage a forwardly facing side surface 77 of the carrier arm 18 for preventing the mounting member 21, and in turn the mower 3 moving downwardly beyond the operative state, when the mounting member 21 and the mower 3 are moving from the displaced state to the operative state. The second abutment surfaces 76 which form the second stop member 73 co-operate with and engage an under surface 78 of the carrier arm 18 for preventing movement of the mounting member 21 and the mower 3 upwardly beyond the displaced state, when the mounting member 21 and the mower 3 are moving from the operative state to the displaced state.

A pair of resilient urging elements comprising a pair of tension springs 80 act between the carrier arm 18 and the mounting member 21 for resiliently urging the mounting member 21 and the mower 3 into the operative state. A threaded rod 81 extends from one end 82 of each tension spring 80 to a corresponding sixth pivot shaft 83, one of which sixth pivot shafts 83 is pivotally carried by and between the second and third mounting plates 35 and 36, and the other of which pivot shafts 83 is pivotally carried on and between the first mounting plate 34 and a fourth mounting plate 84, which is rigidly secured to the carrier arm 18. The threaded rods 81 extend through bores 86 in the corresponding sixth pivot shafts 83, and heads 79 on the threaded rods 81 engage the sixth pivot shafts 83. The threaded shafts 81 engage threaded nuts 95 which are rigidly secured in the ends 82 of the tension springs 80 for securing the threaded rods 81 to the tension springs 80 with the heads 79 of the threaded rods 81 engaging the sixth pivot shafts 83. The sixth pivot shafts 83 define a fifth common pivot axis 85 about which the tension springs 80 are pivotally coupled to the carrier arm 18.

The opposite ends 87 of the tension springs 80 are coupled to the mounting member 21 by corresponding mounting brackets 88, such that the combination of the mounting brackets 88 and the coupling of the tension springs 80 in the mounting brackets 88 effectively define a common sixth pivot axis 89 about which the tension springs 80 are effectively pivotally coupled to the mounting member 21, and in turn to the mower 3.

The fifth and sixth pivot axes 85 and 89, respectively, are spaced apart from each other and extend parallel to each other, and also extend parallel to the first, second, third and fourth pivot axes 40, 58, 65 and 70, respectively.

A single acting hydraulic ram 90 is coupled between the carrier arm 18 and the mounting member 21 for urging the mounting member 21, and in turn the mower 3 into the displaced state when it is desired to raise the mower 3 from the operative state to the displaced state, for example, when the mower 3 is being passed over a sward of cut crop material. However, during normal operation of the mower 3 when cutting a crop, the hydraulic ram 90 is configured in a floating mode whereby hydraulic fluid can freely flow into and out of the hydraulic ram 90 in order to permit the mounting member 21, and in turn the mower 3 to float relative to the carrier arm 18, and to freely move between the operative state and the displaced state.

Returning now to the linkage mechanism 20, the linkage mechanism 20 is configured so that as discussed above the first pivot axis 40, the second pivot axis 58, the third pivot axis 65 and the fourth pivot axis 70 extend parallel to each other and substantially transversely relative to the direction of the normal forward motion of the mower 3. Additionally, the first pivot axis 40, the second pivot axis 58, the third pivot axis 65 and the fourth pivot axis 70 are spaced apart from each other, and the spacing between the four pivot axes 40, 58, 65 and 70 is such that a plane 91 containing the first pivot axis 40 and the second pivot axis 58, and a plane 92 containing the third pivot axis 65 and the fourth pivot axis 70 converge towards each other to meet along a line parallel to the four pivot axes 40, 58, 65 and 70 which defines the main pivot axis 22 about which the mounting member 21 and the mower 3 are moveable relative to the carrier arm 18 between the operative state and the displaced state. Additionally, the spacing between the four pivot axes 40, 58, 65 and 70 is such that when the mounting member 21 and the mower 3 is in the operative state illustrated in Figs. 7 and 9, the main pivot axis 22 about which the mounting member 21 and the mower 3 are moveable between the operative state and the displaced state relative to the carrier arm 18 is located below the surface 23 of the ground, and rearwardly of the area of contact of the skid plate 7 with the surface 23 of the ground. It is the location of the main pivot axis 22 below the surface 23 of the ground and rearwardly of the point of contact of the skid plate 7 with the surface 23 of the ground which facilitates the relatively rapid movement of the mounting member 21 and in turn the mower 3 from the operative state to the displaced state in the event of the mower 3 striking an obstruction in its path.

Additionally, the spacing between the first pivot axis 40, the second pivot axis 58, the third pivot axis 65 and the fourth pivot axis 70 is such that as the mounting member 21 and the mower 3 moves from the operative state illustrated in Figs. 7 and 9 to the displaced state illustrated in Figs. 8 and 10, the angle of attack of the skid plate 7 of the mower 3 increases progressively. The desired angle of attack of the skid plate 7 of a mower 3 relative to the ground typically lies between -6° and -2° to the ground, with the skid plate 7 of the mower 3 inclined downwardly from the trailing edge 9 to the leading edge 8. An angle of attack of a skid plate of -6° to the ground cuts the crop with a relatively "tight cut", in other words, relatively close to the ground, while an angle of attack of the skid plate 7 of a mower 3 at an angle of approximately -2° to the ground results in the crop being cut with a less "tight cut", in other words, not as close to the ground. In this embodiment of the invention the spacing between the four pivot axes 40, 58, 65 and 70 is such that as the mounting member 21 and in turn the mower 3 move from the operative state to the displaced state, the angle of attack of the skid plate 7 of the mower 3 to the ground progressively increases through approximately 4.1°. Therefore, with the angle of attack of the skid plate 7 of the mower 3 set at an angle of -6° when the mounting member 21 and the mower 3 are in the operative state, as the mower 3 moves from the operative state to the displaced state, the angle of attack of the skid plate 7 of the mower 3 progressively increases from -6° to -1.9°. If the skid plate 7 of the mower 3 is set at an angle of -2°, as the mounting member 21 and the mower 3 move from the operative state to the displaced state, the angle of attack progressively increases from -2° to +2.1°. In Fig. 9 with the mower 3 in the operative state the angle of attack of the skid plate 7 of the mower 3 is set at an angle of -6° to the horizontal, with the skid plate 7 inclined generally downwardly from the trailing edge 9 to the leading edge 8.

In this embodiment of the invention the third link member 27 is located rearwardly of the first and second link members 25 and 26. Additionally, a vertical plane extending in the direction of normal forward motion of the mower 3 which contains the third link member is located intermediate the first and second link members 25 and 26 and is spaced apart from the second and fourth locations 42 and 53 when viewed rearwardly in the direction of normal forward motion of the mower 3. As mentioned above, the first, second and third link members 25, 26 and 27 are pivotally coupled to the mounting member 21 by swivellable pivot couplings 48, 56 and 69, and the second and third link members 26 and 27 are pivotally coupled to the carrier arm 18 by swivellable couplings 51 and 63.

The location of the first and second link members 25, 26 and 27 of the linkage mechanism 20 relative to each other, and the swivellable coupling of the first link member 25 to the mounting element 21, and the swivellable coupling of the second and third link members 26 and 27 to the carrier arm 18 and to the mounting element 21 results in the linkage mechanism 20 defining a secondary pivot axis 97 about which the mounting element 21 and the mower 3 are pivotal. The secondary pivot axis 97 inclines downwardly rearwardly at an angle γ to the ground, and is located between the third link member 27 on the one hand, and the first and second link members 25 and 26 on the other hand when the coupling apparatus 1 and the mower 3 are viewed from the end 4 or 6 of the mower 3. Additionally, the secondary pivot axis 97 is contained in a vertical plane extending substantially parallel to the direction of normal forward motion of the mower 3 located between the first and second link members 25 and 26 and spaced apart from the first and second link members 25 and 26. As can be seen from Figs. 9 and 10, as the mounting member 21 and the mower 3 move from the operative state illustrated in Fig. 9 to the displaced state illustrated in Fig. 10, the angle γ of inclination of the secondary pivot axis 97 to the ground decreases.

The mounting member 21 and the mower 3 are tiltable about the secondary pivot axis 97, so that in the event of the mower 3 striking an obstruction towards one end 4 or the other end 6 of the mower 3, the mower 3 and the mounting element 21 tilts about the secondary pivot axis 97. For example, in the event of an obstruction being struck by the mower 3 towards the end 4 thereof, the mower 3 and the mounting element 21 tilts about the secondary pivot axis 97, thus resulting in the end 4 of the mower 3 and in turn the mounting member 21 tilting in a generally upwardly rearwardly direction. Thus, on the mower 3 striking an obstruction adjacent the end 4 thereof, the combination of the movement of the mower 3 from the operative state to the displaced state, and the additional upward and rearward tilting of the end 4 of the mower 3 about the secondary pivot axis 97 further increases the upward and rearward movement of the end 4 of the mower 3, thus enhancing the ability of the mower 3 to ride over the obstruction, or to clear the obstruction until the carrier arm 18 commences to pivot rearwardly and upwardly about the respective vertical and horizontal pivot axes 33 and 13. Conversely, should an obstruction be struck by the mower 3 adjacent the end 6 thereof, the mower 3 tilts about the secondary pivot axis 97 in the reverse direction, thus resulting in the end 6 of the mower 3 tilting upwardly and rearwardly relative to the carrier arm 18.

The tension springs 80 are located rearwardly of the third link member 27 so that the action of the tension springs 80 between the carrier arm 18 and the mounting member 21 is such as to resiliently urge the mounting element 21, and in turn the mower 3 into the operative state.

To stabilise the mounting member 21 and in turn the mower 3 relative to the carrier arm 18 in order to avoid excessive tilting movement of the mounting member 21 and the mower 3 relative to the carrier arm 18 about the secondary pivot axis 97, while at the same time allowing reasonable tilting movement of the mower 3 about the secondary pivot axis 97, the first link member 25 is effectively coupled to the carrier arm 18 by the sleeve 29 at two spaced apart locations along the first pivot axis 40, in other words, the first link member 25 is pivotally coupled to the carrier arm 18 at the first location 39, and is also pivotally coupled to the carrier arm 18 at a seventh location 93 which is defined by the distal end 31 of the sleeve 29. This pivotal coupling of the first link member 25 to the first pivot shaft 38 about the first pivot axis 40 prevents excessive tilting of the mounting member 21 and in turn the mower 3 about the secondary pivot axis 97. However, in this embodiment of the invention the first pivot shaft 38 pivotally engages the sleeve 29 along the entire length of the sleeve 29.

Additionally, the first and second mounting plates 34 and 35 act as abutment plates which are engageable with the first link member 25 and the reinforcing member 30 adjacent the distal end 31 of the sleeve 29, and further, the first link member 25, the sleeve 29 and the reinforcing member 30 are a relatively snug fit between the first and second mounting plate members 34 and 35, which prevents longitudinal movement of the sleeve 29 along the first pivot shaft 38. This in turn prevents longitudinal movement of the mounting member 21 relative to the carrier arm 18, in a direction transversely of the direction of normal forward motion of the mower 3, and in turn prevents similar longitudinal movement of the mower 3 relative to the carrier arm 18.

Adjusting means for adjusting the tension in the tension springs 80 is provided by virtue of the fact that the threaded rods 81 engage the threaded nuts 95 rigidly secured in the ends 82 of the tension springs 80. The portions of the threaded rods 81 extending through the bores 86 in the sixth pivot shafts 83 are not threaded. Accordingly, by rotating the threaded rods 81 in the nuts 95, the threaded rods 81 are urged inwardly or outwardly of the nuts 95, for either shortening or lengthening the effective length of the threaded rods 81 between the ends 82 of the tension springs 80 and the sixth pivot shafts 83, for in turn increasing or decreasing the tension in the tension springs 80. By shortening the length of the threaded rods 81 between the ends 82 of the tension springs 80 and the corresponding sixth pivot shafts 83, the tension in the tension springs 80 is increased, and by increasing the length of pivot rods 81 between the ends 82 of the tension springs 80 and the corresponding second pivot shafts 83, the tension in the tension springs 80 is reduced.

In use, with the mounting frame 2 secured to the three-point linkage of a tractor, and with the carrier arm 18 pivoted downwardly relative to the mounting frame 2 from the transporting state to the working state, and with the angle of attack of the skid plate 7 of the mower 3 adjusted to the desired angle of attack, the mower 3 is ready for use. As the mower 3 is urged forwardly in the direction of the arrow A by the tractor with the disc elements 11 of the mower elements 10 rotating, the crop is cut.

In the event of the mower 3 striking an obstruction, the mower 3 is rapidly urged by the impact relative to the carrier arm 18 about the main pivot axis 22 from the operative state to the displaced state before the carrier arm 18 commences to pivot upwardly and rearwardly about the horizontal pivot axis 13 and the vertical pivot axis 33, in order for the mower 3 to clear and pass over the obstruction.

In the event of the skid plate 7 of the mower 3 striking an obstruction towards one end or the other end thereof, as well as the mower 3 and the mounting member 21 being urged from the operative state to the displaced state, the mower 3 and the mounting member 21 also tilt about the secondary pivot axis 97 so that the end of the mower which struck the object also tilts upwardly and rearwardly about the secondary pivot axis 97.

While the resilient urging means has been described as being provided by a pair of tension springs, any other suitable urging means may be provided, and indeed, in certain cases, it is envisaged that a single resilient urging means, for example, a single tension spring or other such suitable single resilient urging means may be provided.

While the first link member has been described as comprising a sleeve for pivotally coupling the first link member to the carrier arm at two spaced apart locations, any other suitable arrangement besides a sleeve could be provided whereby the first link member would pivotally engage the first pivot shaft 38 at two spaced apart locations along the first pivot axis.

While the linkage mechanism has been described so that as the mower moves from the operative state to the displaced state, the angle of attack of the skid plate increases from a negative angle of attack to a lesser negative angle of attack, it is envisaged in certain cases that as the mower moves from the operative state to the displaced state, the angle of attack of the skid plate may transition from a negative angle to a positive angle.

It is also envisaged that the coupling apparatus according to the invention could be configured for mounting an agricultural implement, for example a mower to a rearward three point linkage of a prime mover directly behind the prime mover.

## Claims

1. Coupling apparatus for connecting an agricultural implement (3) to a rearward three-point linkage of a prime mover, the coupling apparatus comprising a carrier element (18) adapted for connecting to the prime mover, a mounting element (21) adapted for coupling to the agricultural implement (3), a linkage mechanism (20) connecting the mounting element (21) to the carrier element (18) with the mounting element (21) and the agricultural implement (3) suspended by the linkage mechanism (20) from the carrier element, the linkage mechanism (20) defining a main pivot axis (22) about which the mounting element (21) and the agricultural implement (3) are moveable relative to the carrier element (18) between an operative state and a displaced state displaced from the operative state, and a resilient element (80) connected between the carrier element (18) and the mounting element (21) and configured to resiliently urge the mounting element (21) and the agricultural implement (3) into the operative state, **characterised in that** the linkage mechanism (20) comprises a first link member (25) pivotally connected to the carrier element (18) about a first pivot axis (40) at a first location (39) and pivotally connected to the mounting element (21) about a second pivot axis (58) at a second location (42), a second link member (26) pivotally connected to the carrier element (18) about the first pivot axis (40) at a third location (50) spaced apart from the first location (39) along the first pivot axis (40) and pivotally connected to the mounting element (21) about the second pivot axis (58) at a fourth location (53) spaced apart from the second location (42) along the second pivot axis (58), and a third link member (27) pivotally connected to one of the carrier element (18) and the mounting element (21) about a third pivot axis (65) at a fifth location (67) and pivotally connected to the other one of the carrier element (18) and the mounting element (21) about a fourth pivot axis (70) at a sixth location (68), the first, second, third and fourth pivot axes (40,58,65,70) being spaced apart from each other and extending parallel to each other and substantially transversely relative to the direction of normal forward motion of the agricultural implement (3), the first link member (25) is pivotally connected to the carrier element (18) about the first pivot axis (40) at a seventh location (93) spaced apart from the first location (39) along the first pivot axis (40) for minimising slewing of the mounting element (21) relative to the carrier element (18) about the linkage mechanism (20), and a stabilising means (34,35) comprising a pair of spaced apart abutment elements (34,35) extends from the carrier element (18) for engaging the first link member (25) adjacent the first location (39) and the seventh location (93) for minimising axial movement of the first link member (25) along the first pivot axis (40).

2. Coupling apparatus as claimed in Claim 1 **characterised in that** a limit means (72,75,74,77,73,76,78) is configured for defining the limit of the movement of the mounting element (21) relative to the carrier element (18) towards the operative state.

3. Coupling apparatus as claimed in Claim 2 **characterised in that** the limit means (72,75,74,77,73,76,78) comprises a first stop means (72,75,74), the first stop means being located on at least one of the first and second link members (25,26), and co-operating with the carrier element (18,77) to prevent movement of the agricultural implement beyond the operative state in a direction from the displaced state to the operative state.

4. Coupling apparatus as claimed in Claim 2 or 3 **characterised in that** the limit means (72,75,74,77,73,76,78) is configured for defining the limit of movement of the mounting element (21) relative to the carrier element (18) towards the displaced state.

5. Coupling apparatus as claimed in Claim 4 **characterised in that** the limit means (72,75,74,77,73,76,78) comprises a second stop means (73,76), the second stop means being located on at least one of the first and second link members (25,26), and co-operating with the carrier element (18,78) to prevent movement of the agricultural implement beyond the displaced state in a direction from the operative state to the displaced state.

6. Coupling apparatus as claimed in any preceding claim **characterised in that** the linkage mechanism (20) is configured to define the main pivot axis (22) about which the mounting element (21) and the agricultural implement (3) are moveable relative to the carrier element (18) at a location at a level below the ground, and generally rearwardly of an area of contact of the agricultural implement (3) with the ground, relative to the direction of normal forward motion of the agricultural implement (3), when the agricultural implement (3) is in the operative state.

7. Coupling apparatus as claimed in any preceding claim **characterised in that** the linkage mechanism (20) is configured so that as the mounting element (21) moves relative to the carrier element (18) from the operative state to the displaced state, the angle of attack of the agricultural implement (3) relative to the horizontal progressively increases, and as the mounting element (21) moves relative to the carrier element (18) from the displaced state to the operative state, the angle of attack of the agricultural implement (3) relative to the horizontal regressively decreases.

8. Coupling apparatus as claimed in any preceding claim **characterised in that** the linkage mechanism (20) defines a secondary pivot axis (97) about which the mounting element (21) and the agricultural implement (3) are tiltable.

9. Coupling apparatus as claimed in Claim 8 **characterised in that** the secondary pivot axis (97) defined by the linkage mechanism (20) inclines in a generally downwardly rearwardly direction relative to the direction of normal forward motion of the agricultural implement.

10. Coupling apparatus as claimed in Claim 8 or 9 **characterised in that** the secondary pivot axis (97) defined by the linkage mechanism (20) is contained in a vertical plane extending in a direction of the normal forward motion of the agricultural implement (3) and is located intermediate the first location and the third location (39,42), and spaced apart from the first location (39) and the second location (42).

11. Coupling apparatus as claimed in any preceding claim **characterised in that** the third link member (27) is located rearwardly of the first and second link members (25,26) relative to the direction of normal forward motion of the agricultural implement (3).

12. Coupling apparatus as claimed in any preceding claim **characterised in that** the third link member (27) is contained in a vertical plane extending in the direction of normal forward motion of the agricultural implement located intermediate the first location (39) and the third location (50) and spaced apart therefrom.

13. Coupling apparatus as claimed in any preceding claim **characterised in that** each one of the first and second link members (25,26) are pivotally coupled to the mounting element (21) about the second pivot axis (58) by swivellable pivot couplings (48,56), and the second link member (26) is pivotally coupled to the carrier element (18) about the first pivot axis (40) by a swivellable pivot coupling (51).

14. Coupling apparatus as claimed in any preceding claim **characterised in that** the first link member (25) is pivotally connected to the carrier element (18) by a first pivot shaft (38) carried on the carrier element (18), the first pivot shaft (38) defining the first pivot axis (40).

15. Coupling apparatus as claimed in Claim 14 **characterised in that** a sleeve (29) extends rigidly from the first link member (25) and is pivotally engageable with the first pivot shaft (38), a distal end (31) of the sleeve (29) defining the seventh location (93), and the sleeve (29) is retained between the abutment elements (34,35) extending from the carrier element (18) for preventing movement of the sleeve (29) longitudinally along the first pivot shaft (38) for stabilising the mounting element (21) relative to the carrier element (18).

16. In combination a prime mover, an agricultural implement, and coupling apparatus connecting the agricultural implement to a rearward three-point linkage of the prime mover, **characterised in that** the coupling apparatus comprises coupling apparatus as claimed in any preceding claim.

## Patentansprüche

1. Kopplungsvorrichtung zum Verbinden eines landwirtschaftlichen Arbeitsgeräts (3) mit einer heckseitigen Dreipunktaufhängung einer Zugmaschine, wobei die Kopplungsvorrichtung umfasst ein Trägerelement (18), das zum Verbinden der Zugmaschine ausgebildet ist, ein Befestigungselement (21), das zum Koppeln des landwirtschaftlichen Arbeitsgeräts (3) ausgebildet ist, einen Verbindungsmechanismus (20), der das Befestigungselement (21) mit dem Trägerelement (18) verbindet, wobei das Befestigungselement (21) und das landwirtschaftliche Arbeitsgerät (3) anhand des Verbindungsmechanismus (20) am Trägerelement aufgehängt sind, wobei der Verbindungsmechanismus (20) eine Hauptschwenkachse (22) definiert, um die das Befestigungselement (21) und das landwirtschaftliche Arbeitsgerät (3) bezüglich des Trägerelements (18) zwischen einem betriebswirksamen Zustand und einem gelösten Zustand, der aus dem Betriebszustand gelöst ist, bewegbar sind, und ein Federelement (80), das zwischen dem Trägerelement (18) und dem Befestigungselement (21) verbunden und zum federnden Drängen des Befestigungselements (21) und des landwirtschaftlichen Arbeitsgerät (3) in den betriebswirksamen Zustand konfiguriert ist, **dadurch gekennzeichnet, dass** der Verbindungsmechanismus (20) ein erstes Verbindungsglied (25), das mit dem Trägerelement (18) um eine erste Schwenkachse (40) an einer ersten Stelle (39) schwenkbar verbunden ist und mit dem Befestigungselement (21) um eine zweite Schwenkachse (58) an einer zweiten Stelle (42) schwenkbar verbunden ist, ein zweites Verbindungsglied (26), das mit dem Trägerelement (18) um die erste Schwenkachse (40) an einer dritten Stelle (50) schwenkbar verbunden ist, die von der ersten Stelle (39) entlang der ersten Schwenkachse (40) beabstandet ist, und mit dem Befestigungselement (21) um die zweite Schwenkachse (58) an einer vierten Stelle (53) schwenkbar verbunden ist, die von der zweiten Stelle (42) entlang der zweiten Schwenkachse (58) beabstandet ist, und ein drittes Verbindungsglied (27) umfasst, das mit einem aus dem Trägerelement (18) und dem Befestigungselement (21) um eine dritte Schwenkachse (65) an einer fünften Stelle (67) schwenkbar verbunden ist, und mit dem anderen aus dem Trägerelement (18) und dem Befestigungselement (21) um eine vierte Schwenkachse (70) an einer sechsten Stelle (68) schwenkbar verbunden ist, wobei die erste, zweite, dritte und vierte Schwenkachsen (40,58,65,70) voneinander beabstandet sind und sich parallel zueinander und im Wesentlichen quer zur Richtung der normalen Vorwärtsbewegung des landwirtschaftlichen Arbeitsgeräts (3) erstrecken, das erste Verbindungsglied (25) mit dem Trägerelement (18) um die erste Schwenkachse (40) an einer siebten Stelle (93) schwenkbar verbunden ist, die von der ersten Stelle (39) entlang der ersten Schwenkachse (40) beabstandet ist, um das Drehen des Befestigungselements (21) bezüglich des Trägerelements (18) um den Verbindungsmechanismus (20) zu minimieren, und sich ein Stabilisierungsmittel (34,35), das ein Paar beabstandeter Anschlagelemente (34,35) umfasst, vom Trägerelement (18) erstreckt, um das erste Verbindungsglied (25) neben der ersten Stelle (39) und der siebten Stelle (93) zu verbinden, um axiale Bewegung des ersten Verbindungsglieds (25) um die erste Schwenkachse (40) zu minimieren.

2. Kopplungsvorrichtung nach Anspruch 1, **dadurch gekennzeichnet, dass** ein Begrenzungsmittel (72,75,74,77,73,76,78) zum Definieren der Bewegungsgrenze des Befestigungselements (21) bezüglich des Trägerelements (18) in Richtung des betriebswirksamen Zustands konfiguriert ist.

3. Kopplungsvorrichtung nach Anspruch 2, **dadurch gekennzeichnet, dass** das Begrenzungsmittel (72,75,74,77,73,76,78) ein erstes Anschlagmittel (72,75,74) umfasst, wobei sich das erste Anschlagmittel an mindestens einem aus dem ersten und zweiten Verbindungsglied (25,26) befindet, und mit dem Trägerelement (18,77) zusammenarbeitet, um Bewegung des landwirtschaftlichen Arbeitsgeräts über den betriebswirksamen Zustand hinaus bei einer Richtung vom gelösten Zustand in den betriebswirksamen Zustand zu verhindern.

4. Kopplungsvorrichtung nach Anspruch 2 oder 3, **dadurch gekennzeichnet, dass** das Begrenzungsmittel (72,75,74,77,73,76,78) zum Definieren der Bewegungsgrenze des Befestigungselements (21) bezüglich des Trägerelements (18) in Richtung des gelösten Zustands konfiguriert ist.

5. Kopplungsvorrichtung nach Anspruch 4, **dadurch gekennzeichnet, dass** das Begrenzungsmittel (72,75,74,77,73,76,78) ein zweites Anschlagmittel (73,76) umfasst, wobei sich das zweite Anschlagmittel an mindestens einem aus dem ersten und zweiten Verbindungsglied (25,26) befindet, und mit dem Trägerelement (18,78) zusammenarbeitet, um Bewegung des landwirtschaftlichen Arbeitsgeräts über den gelösten Zustand hinaus bei einer Richtung die vom betriebswirksamen Zustand in den gelösten Zustand zu verhindern.

6. Kopplungsvorrichtung nach einem der vorhergehenden Ansprüche, **dadurch gekennzeichnet, dass** der Verbindungsmechanismus (20) zum Definieren der Hauptschwenkachse (22), um die das Befestigungselement (21) und das landwirtschaftliche Arbeitsgerät (3) bezüglich des Trägerelements (18) beweglich sind, an einer Stelle auf einer Ebene unter der Erde und im Allgemeinen hinter einem Kontaktbereichs des landwirtschaftlichen Arbeitsgeräts (3) mit der Erde bezüglich der Richtung der normalen Vorwärtsbewegung des landwirtschaftlichen Arbeitsgeräts (3) konfiguriert ist, wenn sich das landwirtschaftliche Arbeitsgerät (3) im betriebswirksamen Zustand befindet.

7. Kopplungsvorrichtung nach einem der vorhergehenden Ansprüche, **dadurch gekennzeichnet, dass** der Verbindungsmechanismus (20) so konfiguriert ist, dass der Anstellwinkel des landwirtschaftlichen Arbeitsgeräts (3), wenn sich das Befestigungselement (21) bezüglich des Trägerelements (18) vom betriebswirksamen Zustand in den gelösten Zustand bewegt, bezüglich der Horizontalen zunehmend größer wird, und der Anstellwinkel des landwirtschaftlichen Arbeitsgeräts (3), wenn sich das Befestigungselement (21) bezüglich des Trägerelements (18) aus dem gelösten Zustand in den betriebswirksamen Zustand bewegt, bezüglich der Horizontalen rückläufig kleiner wird.

8. Kopplungsvorrichtung nach einem der vorhergehenden Ansprüche, **dadurch gekennzeichnet, dass** der Verbindungsmechanismus (20) eine zusätzliche Schwenkachse (97) definiert, um die das Befestigungselement (21) und das landwirtschaftliche Arbeitsgerät (3) kippbar sind.

9. Kopplungsvorrichtung nach Anspruch 8, **dadurch gekennzeichnet, dass** sich die zusätzliche Schwenkachse (97), die vom Verbindungsmechanismus (20) definiert wird, in einer im Allgemeinen nach unten und hinten gerichteten Richtung bezüglich der Richtung der normalen Vorwärtsbewegung des landwirtschaftlichen Arbeitsgeräts neigt.

10. Kopplungsvorrichtung nach Anspruch 8 oder 9, **dadurch gekennzeichnet, dass** die zusätzliche Schwenkachse (97), die vom Verbindungsmechanismus (20) definiert wird, in einer vertikalen Ebene enthalten ist, die sich in einer Richtung der normalen Vorwärtsbewegung des landwirtschaftlichen Arbeitsgeräts (3) erstreckt und sich zwischen der ersten Stelle und der dritten Stelle (39,42) befindet und von er ersten Stelle (39) und der zweiten Stelle (42) beabstandet ist.

11. Kopplungsvorrichtung nach einem der vorhergehenden Ansprüche, **dadurch gekennzeichnet, dass** sich das dritte Verbindungsglied (27) hinter dem ersten und zweiten Verbindungselement (25,26) bezüglich der Richtung der normalen Vorwärtsbewegung des landwirtschaftlichen Arbeitsgeräts (3) befindet.

12. Kopplungsvorrichtung nach einem der vorhergehenden Ansprüche, **dadurch gekennzeichnet, dass** das dritte Verbindungsglied (27) in einer vertikalen Ebene enthalten ist, die sich in der Richtung der normalen Vorwärtsbewegung des landwirtschaftlichen Arbeitsgeräts erstreckt, befindlich zwischen der ersten Stelle (39) und der dritten Stelle (50) und davon beabstandet.

13. Kopplungsvorrichtung nach einem der vorhergehenden Ansprüche, **dadurch gekennzeichnet, dass** eines aus dem ersten und zweiten Verbindungsglied (25,26) mit dem Befestigungselement (21) um die zweite Schwenkachse (58) anhand drehbarer Schwenkkupplungen (48,56) schwenkbar verbunden sind, und das zweite Verbindungsglied (26) mit dem Trägerelement (18) um die erste Schwenkachse (40) anhand einer drehbaren Schwenkkupplung (51) schwenkbar verbunden ist.

14. Kopplungsvorrichtung nach einem der vorhergehenden Ansprüche, **dadurch gekennzeichnet, dass** das erste Verbindungsglied (25) mit dem Trägerelement (18) anhand einer ersten Schwenkwelle (38) schwenkbar verbunden ist, die vom Trägerelement (18) getragen wird, wobei die erste Schwenkwelle (38) die erste Schwenkachse (40) definiert.

15. Kopplungsvorrichtung nach Anspruch 14, **dadurch gekennzeichnet, dass** sich eine Hülse (29) fest vom ersten Verbindungsglied (25) erstreckt und drehbar mit der ersten Schwenkwelle (38) verbindbar ist, wobei ein distales Ende (31) der Hülse (29) die siebte Stelle (93) definiert, und die Hülse (29) zwischen den Anschlagelementen (34,35) festgehalten wird, die sich vom Trägerelement (18) erstrecken, um eine Bewegung der Hülse (29) in Längsrichtung entlang der Schwenkwelle (38) zu verhindern, wodurch das Befestigungselement (21) bezüglich des Trägerelements (18) stabilisiert wird.

16. In Kombination eine Zugmaschine, ein landwirtschaftliches Arbeitsgerät und eine Kopplungsvorrichtung, die das landwirtschaftliche Arbeitsgerät mit einer heckseitigen Dreipunktaufhängung der Zugmaschine verbindet, **dadurch gekennzeichnet, dass** die Kopplungsvorrichtung eine Kopplungsvorrichtung nach einem der vorhergehenden Ansprüche umfasst.

## Revendications

1. Appareil de couplage pour raccorder un instrument agricole (3) à une liaison trois points arrière d'un moteur principal, l'appareil de couplage comprenant un élément de support (18) adapté pour le raccordement au moteur principal, un élément de montage (21) adapté pour le couplage à l'instrument agricole (3), un mécanisme de liaison (20) raccordant l'élément de montage (21) à l'élément de support (18) avec l'élément de montage (21) et l'instrument agricole (3) suspendus par le mécanisme de liaison (20) à l'élément de support, le mécanisme de liaison (20) définissant un axe de pivot principal (22) autour duquel l'élément de montage (21) et l'instrument agricole (3) sont mobiles par rapport à l'élément de support (18) entre un état opérationnel et un état déplacé, déplacé depuis l'état opérationnel, et un élément résilient (80) raccordé entre l'élément de support (18) et l'élément de montage (21) et configuré pour pousser, de manière résiliente, l'élément de montage (21) et l'instrument agricole (3) dans l'état opérationnel, **caractérisé en ce que** le mécanisme de liaison (20) comprend un premier élément de liaison (25) raccordé, de manière pivotante, à l'élément de support (18) autour d'un premier axe de pivot (40) à un premier emplacement (39) et raccordé, de manière pivotante, à l'élément de montage (21) autour d'un deuxième axe de pivot (58) à un deuxième emplacement (42), un deuxième élément de liaison (26) raccordé, de manière pivotante, à l'élément de support (18) autour du premier axe de pivot (40) à un troisième emplacement (50) espacé du premier emplacement (39) le long du premier axe de pivot (40) et raccordé, de manière pivotante, à l'élément de montage (21) autour du deuxième axe de pivot (58) à un quatrième emplacement (53) espacé du deuxième emplacement (42) le long du deuxième axe de pivot (58), et un troisième élément de liaison (27) raccordé, de manière pivotante, à l'un parmi l'élément de support (18) et l'élément de montage (21) autour d'un troisième axe de pivot (65) à un cinquième emplacement (67) et raccordé, de manière pivotante, à l'autre parmi l'élément de support (18) et l'élément de montage (21) autour d'un quatrième axe de pivot (70) à un sixième emplacement (68), les premier, deuxième, troisième et quatrième axes de pivot (40, 58, 65, 70) étant espacés les uns des autres et s'étendant parallèlement entre eux et sensiblement transversalement par rapport à la direction du mouvement avant normal de l'instrument agricole (3), le premier élément de liaison (25) est raccordé, de manière pivotante, à l'élément de support (18) autour du premier axe de pivot (40) à un septième emplacement (93) espacé du premier emplacement (39) le long du premier axe de pivot (40) pour minimiser le pivotement de l'élément de montage (21) par rapport à l'élément de support (18) autour du mécanisme de liaison (20), et un moyen de stabilisation (34, 35) comprenant une paire d'éléments de butée (34, 35) espacés s'étend à partir de l'élément de support (18) pour mettre en prise le premier élément de liaison (25) adjacent à le premier emplacement (39) et le septième emplacement (93) pour minimiser le mouvement axial du premier élément de liaison (25) le long du premier axe de pivot (40).

2. Appareil de couplage selon la revendication 1, **caractérisé en ce qu'**un moyen de limitation (72, 75, 74, 77, 73, 76, 78) est configuré pour définir la limite de mouvement de l'élément de montage (21) par rapport à l'élément de support (18) vers l'état opérationnel.

3. Appareil de couplage selon la revendication 2, **caractérisé en ce que** le moyen de limitation (72, 75, 74, 77, 73, 76, 78) comprend un premier moyen de butée (72, 75, 74), le premier moyen de butée étant positionné sur au moins l'un parmi les premier et deuxième éléments de liaison (25, 26) et coopérant avec l'élément de support (18, 77) pour empêcher le mouvement de l'instrument agricole au-delà de l'état opérationnel dans une direction allant de l'état déplacé à l'état opérationnel.

4. Appareil de couplage selon la revendication 2 ou 3, **caractérisé en ce que** le moyen de limitation (72, 75, 74, 77, 73, 76, 78) est configuré pour définir la limite de mouvement de l'élément de montage (21) par rapport à l'élément de support (18) vers l'état déplacé.

5. Appareil de couplage selon la revendication 4, **caractérisé en ce que** le moyen de limitation (72, 75, 74, 77, 73, 76, 78) comprend un second moyen de butée (73, 76), le second moyen de butée étant positionné sur au moins l'un parmi les premier et deuxième éléments de liaison (25, 26) et coopérant avec l'élément de support (18, 78) pour empêcher le mouvement de l'instrument agricole au-delà de l'état déplacé dans une direction allant de l'état opérationnel à l'état déplacé.

6. Appareil de couplage selon l'une quelconque des revendications précédentes, **caractérisé en ce que** le mécanisme de liaison (20) est configuré pour définir l'axe de pivot principal (22) autour duquel l'élément de montage (21) et l'instrument agricole (3) sont mobiles par rapport à l'élément de support (18) à un emplacement à un niveau au-dessous du sol, et généralement vers l'arrière d'une zone de contact de l'instrument agricole (3) avec le sol, par rapport à la direction du mouvement avant normal de l'instrument agricole (3), lorsque l'instrument agricole (3) est à l'état opérationnel.

7. Appareil de couplage selon l'une quelconque des revendications précédentes, **caractérisé en ce que** le mécanisme de liaison (20) est configuré de sorte que lorsque l'élément de montage (21) se déplace par rapport à l'élément de support (18) de l'état opérationnel à l'état déplacé, l'angle d'attaque de l'instrument agricole (3) par rapport à l'horizontale augmente progressivement, et lorsque l'élément de montage (21) se déplace par rapport à l'élément de support (18) de l'état déplacé à l'état opérationnel, l'angle d'attaque de l'instrument agricole (3) par rapport à l'horizontale diminue de manière régressive.

8. Appareil de couplage selon l'une quelconque des revendications précédentes, **caractérisé en ce que** le mécanisme de liaison (20) comprend un axe de pivot secondaire (97) autour duquel l'élément de montage (21) et l'instrument agricole (3) peuvent s'incliner.

9. Appareil de couplage selon la revendication 8, **caractérisé en ce que** l'axe de pivot secondaire (97) défini par le mécanisme de liaison (20) s'incline dans une direction généralement vers l'arrière et vers le bas par rapport à la direction du mouvement vers l'avant normal de l'instrument agricole.

10. Appareil de couplage selon la revendication 8 ou 9, **caractérisé en ce que** l'axe de pivot secondaire (97) défini par le mécanisme de liaison (20) est contenu dans un plan vertical s'étendant dans une direction du mouvement vers l'avant normal de l'instrument agricole (3) et est positionné entre le premier emplacement et le troisième emplacement (39, 42) et espacé du premier emplacement (39) et du deuxième emplacement (42).

11. Appareil de couplage selon l'une quelconque des revendications précédentes, **caractérisé en ce que** le troisième élément de liaison (27) est positionné vers l'arrière des premier et deuxième éléments de liaison (25, 26) par rapport à la direction du mouvement vers l'avant normal de l'instrument agricole (3).

12. Appareil de couplage selon l'une quelconque des revendications précédentes, **caractérisé en ce que** le troisième élément de liaison (27) est contenu dans un plan vertical s'étendant dans la direction du mouvement vers l'avant normal de l'instrument agricole positionné entre le premier emplacement (39) et le troisième emplacement (50) et espacé de ces derniers.

13. Appareil de couplage selon l'une quelconque des revendications précédentes, **caractérisé en ce que** chacun parmi les premier et deuxième éléments de liaison (25, 26) est couplé de manière pivotante à l'élément de montage (21) autour du deuxième axe de pivot (58) par des couplages de pivot orientables (48, 56) et le deuxième élément de liaison (26) est couplé de manière pivotante à l'élément de support (18) autour du premier axe de pivot (40) par un couplage de pivot orientable (51).

14. Appareil de couplage selon l'une quelconque des revendications précédentes, **caractérisé en ce que** le premier élément de liaison (25) est raccordé, de manière pivotante, à l'élément de support (18) par un premier arbre de pivot (38) porté sur l'élément de support (18), le premier arbre de pivot (38) définissant le premier axe de pivot (40).

15. Appareil de couplage selon la revendication 14, **caractérisé en ce qu'**un manchon (29) s'étend de manière rigide à partir du premier élément de liaison (25) et peut se mettre en prise, de manière pivotante, avec le premier arbre de pivot (38), une première extrémité (31) du manchon (29) définissant le septième emplacement (93), et le manchon (29) est retenu entre les éléments de butée (34, 35) s'étendant à partir de l'élément de support (18) pour empêcher le mouvement du manchon (29) de manière longitudinale le long du premier arbre de pivot (38) afin de stabiliser l'élément de montage (21) par rapport à l'élément de support (18).

16. En combinaison, un moteur principal, un instrument agricole et un appareil de couplage raccordant l'instrument agricole à la liaison trois points arrière du moteur principal, **caractérisés en ce que** l'appareil de couplage comprend l'appareil de couplage selon l'une quelconque des revendications précédentes.
